# EUROPEAN PATENT SPECIFICATION

(11) **EP 4 124 407 B1**
(45) Date of publication and mention of the grant of the patent: **28.01.2026**
(21) Application number: 22187755.8
(22) Date of filing: 29.07.2022
(51) Int. Cl.: B23Q 1/01, B23Q 1/54, B23Q 3/12, B23Q 3/157, B23Q 5/04, B23Q 39/02

(54) **MACHINING CENTER, IN PARTICULAR FOR BEAMS OR SIMILAR**
BEARBEITUNGSZENTRUM, INSBESONDERE FÜR BALKEN ODER DERGLEICHEN
CENTRE D'USINAGE, EN PARTICULIER POUR LES POUTRES OU SIMILAIRES

(30) Priority: 30.07.2021 IT 202100020585
(43) Date of publication of application: 01.02.2023
(73) Proprietor: Essetre S.r.l., 36016 Thiene (VI) (IT)
(72) Inventor: SELLA, Nicola, 36016 Thiene (VI) (IT)
(74) Representative: Karaghiosoff, Giorgio Alessandro

(56) References cited:
- EP-A1- 2 338 638
- EP-A2- 2 594 358
- CN-A- 111 805 281

## Description

The present invention relates to a machining centre, in particular for beams, or similar, comprising:
- a gantry beam having a passage opening for a beam to be machined;
- feeding devices for a beam to be machined, according to a straight feeding path of said beam that is oriented according to a first translation and insertion axis (X) of the beam through said passage opening;
- a working unit comprising an electrospindle for coupling and driving at least one working tool;
- said working unit being supported by means of handling devices according to at least one axis, preferably according to five axes of handling, and wherein
- there is provided at least one tool changing station comprising a tool magazine, whereby said working unit is movable by said handling device in said at least one tool changing station, with the electrospindle being in the position of loading and/or unloading a tool in said tool magazine,

said electrospindle being provided with automatic devices for coupling to a tool and/or uncoupling and unloading of a tool.

Machining centers of this type are known in the art, e.g. and not limited to documents IT102016000107750 and IT102011901997732.

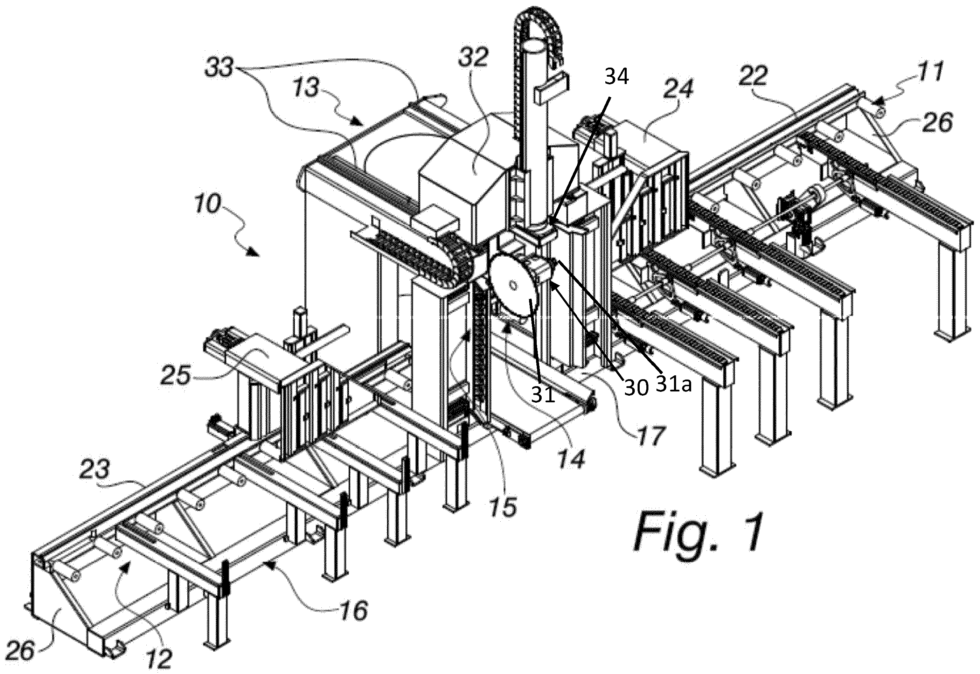

In particular, and by way of example only, Figure 1 shows a machining centre according to the known art and as described above. The exemplary machining centre in Figure 1 is a so-called fixed gantry machining centre for processing wooden beams and is indicated overall by 10. Said machining centre 10 comprises a loading roller conveyor 11, an unloading roller conveyor 12 and a central frame 13 carrying the working unit 14, and the corresponding tool magazine 15. In this exemplary embodiment, the loading roller conveyor 11, the unloading roller conveyor 12 and the central frame 13 are pre-assembled to define a one-piece base 16.

In the embodiment described herein, which is to be intended as an example and not as a limitation of the invention, the one-piece base 16 has a longitudinal structural element 17, which is horizontal, to which the loading roller conveyor 11 and unloading roller tracks 12 and the central frame 13 are fixed. The rollers of the roller conveyor 11 and 12 are supported by bent sheet metal supports, which also define the guides 22 and 23 for a loading gripper 24 and an unloading gripper 25. The bent sheet metal supports are in turn supported and connected to the structural longitudinal element 17 by shoulders 26, also made of suitably shaped sheet metal. The loading roller conveyor 11 and unloading roller conveyors 12 are oriented in a first direction x of translation of the beams for feeding said beams or parts of said beams into the processing station in the central frame 13. Said roller conveyors 11 and 12 are interrupted at the central frame 13, which is also fixed by front upright elements to the structural longitudinal element 17, in order to allow, according to the known technique, the passage of tools.

The working unit 14 according to this example comprises an electrospindle 30 which is of the double output type, with a first output for a blade, 31, and a second output 31a for a milling cutter. However, instead of the said dual output electrospindle, a single output electrospindle may also be provided. The electrospindle 30 is carried by a carriage 32 movable along a second y-direction on corresponding guides 33 above the central frame 13, by means of a vertical arm 34 translatable vertically in a third Z-direction.

In particular, the illustrated state-of-the-art example shows a working unit 14 which is movable at least according to the two directions y and z, in this case a horizontal direction y perpendicular to the processing direction of the beams and a vertical direction z, while said working unit is rotatable around said axis Z and the electrospindle 30 is in turn rotatable and swivelling around the axis perpendicular to said axis Z.

A possible embodiment, may provide that said working unit 14 is further movable along the X-axis parallel to the axis of processing of the beams on the roller conveyors, thanks to a wagon structure supported on further guides oriented in the direction of said X-axis and on which, in turn, the guides 33 of the carriage 32 are mounted.

It is clear that in the form shown, the working unit has at least four and optionally five movement axes.

With regard to the double-output electrospindle in particular and the automatic tool changers, this type of electrospindle is known and examples of the same are described in document IT102016000107750. In this example, the double-output electrospindle shows a circular saw blade permanently fixed to one output, while the opposite output features a tool-fixing spindle, in particular and preferably by means of automatic coupling and uncoupling by means of automatic tool changing members, which can be implemented according to the example described in the aforementioned document.

As is evident from Figure 1 relating to the known state of the art, the machining unit configured with the five movement axes allows a considerable number of beam machining operations to be carried out; however, machining operations using the milling tools on the side of the beam supporting the roller way, i.e. below, remain precluded. Such machining is possible, for example, by providing for angular rotation of the beam around the longitudinal axis or the X crossing axis, or the provision of at least one further axis of movement of the machining tool.

In the first case, the movement of the beam may result in offsets in the position of the beam with respect to a reference position, so that the machining operations performed may assume incorrect relative positions with respect to the machining operations performed on the other faces of the beam. Furthermore, the process of rotating the beam on itself requires a certain amount of time and members suitable for carrying out this rotation. In fact, before rotating the beam, it is necessary to free the beam from the clamp exerted by the jaws of the holding clamp in place, then rotate the beam around its own axis without causing displacement in the beam's forward direction and in a direction perpendicular to it, in the horizontal plane, and finally activate the clamping again using the holding clamps at position.

In the embodiment involving the addition of movement axes, the machining unit would be very complex and each movement axis could introduce positioning tolerances that could again result in inaccuracies in the planned machining operations.

The Document EP2338638 describes a coupling to be attached to a spindle head of a vertical machining centre to couple with an angle tool holder and perform five-sided machining. A coupling element for coupling an angle tool for five-sided machining. The angular tool shown consists of an angular transmission from an input shaft to an output shaft, which output shaft stably carries an angular cutting tool. It is not intended that the angle tool can be modified, in the sense that different tools can be mounted alternately to the angle tool drive.

The Document CN111805281 (WO2021258874A1) describes a T-shaped tool holder comprising an input shaft that is perpendicular to two coaxial, opposed output shafts. The input shaft is perpendicular to the two opposed output shafts and bears at its end a coupling end to a drive spindle, while each of the two opposed output shafts bears at their opposite ends a removable coupling spindle of a plurality of tools.

The Document EP2594358 describes an electrospindle comprising a driven shaft each of whose opposite ends is configured to carry a tool and at least one of which has a removable coupling spindle of alternatively one of a plurality of different tools.

The purpose of the invention is therefore to realise a machining centre of the type described at the beginning in which, without requiring an additional rotation of the beams and/or without requiring additions of degrees of freedom, i.e. of movement axes, and therefore without making the structure of the machining tool and of the movement means more complex, it enables milling to be performed on all four faces of a beam, i.e. also on the faces of the beam facing the transport way such as the aforementioned roller way or similar.

A further aspect of the present invention is to achieve this functionality in a simple and reliable manner with regard to machining precision.

Yet another aspect of the present invention is that it provides a solution that can also be applied in the form of an upgrade in existing machines.

The present invention solves the problem posed by a machining centre according to appended claim 1.

Such an intermediate tool-holder head can comprise an angled drive, for example a drive coupling the input shaft to the output shaft with bevel gears, with a 45° taper.

Such an intermediate tool-holder head may comprise a transmission of the actuating movement of the tool coupling/uncoupling members provided on the electrospindle to the coupling spindle provided on the output shaft of the intermediate tool-holder head.

The type of transmission of this actuation movement can be any kinematic chain chosen from the various options available to the skilled person in the art.

According to yet another embodiment which may be provided in combination with one of the preceding embodiments, said intermediate tool-holder head may have two output shafts which are opposed and coaxial or parallel to each other and which terminate with a corresponding tool coupling spindle at the opposing head faces of the transverse branch of said intermediate tool-holder head, with reference to the axis of the electrospindle.

It is clear from the above that two versions of the intermediate tool-holder head are possible, namely: an angled version and a 'T'-shaped version, wherein the leg of the 'T' is parallel to the spindle axis.

According to an embodiment of the invention which can be provided in combination with any one or more of the embodiments described above, said machining centre can provide two or more intermediate tool-holder heads which can be coupled and decoupled in an automatic manner analogous to the tools at least one of the electrospindle outputs.

In an executive form, the said intermediate tool-holder head(s) are housed in a separate tool-holder magazine.

An embodiment variant of said magazine comprise supports for said tool heads which are alternatively movable in a position withdrawn from a coupling/uncoupling station, i.e. of loading and unloading of said intermediate tool-holder heads in a position coinciding with said station for performing loading and/or unloading actions of an intermediate tool-holder head, and wherein in said coupling/uncoupling station i.e. of loading and unloading said intermediate tool-holder heads, one of said tool-holder heads or a support for one of said tool-holder heads is aligned with said electrospindle for coupling an intermediate tool-holder head to said electrospindle and/or for unloading an intermediate tool-holder head from said electrospindle.

In an embodiment, the storage for intermediate tool-holder heads comprises an arm that can be extended and/or shortened, e.g. telescopically or otherwise, one end of which arm is permanently fixed to a stationary structural reference, while the free end is provided with one or more cradles or housings for storage of a corresponding intermediate tool-holder head.

In combination with any of the above, the electrospindle can comprise two outputs, one of which is permanently coupled to a circular blade.

In an executive form, the electrospindle can be manufactured according to IT102016000107750 or IT102011901997732.

Further features are the subject of dependent claims.

The above and the following description will clearly show the advantages of the present invention.

Thanks to the use of an intermediate tool holder with a tool rotation axis perpendicular to the spindle axis, it is possible to machine on several sides of a workpiece without having to reposition the workpiece.

When using an intermediate head that has two output shafts opposed to each other and perpendicular to the electrospindle shaft, two different tools can be applied on the same electrospindle output, each of which can perform a machining operation on all faces of a workpiece without requiring it to be moved.

In this case, having two tool-holding spindles on the same intermediate head reduces the downtime of machining to perform a tool change, resulting in a more efficient machining process.

According to a further feature, which may be comprised in any combination with one of the preceding embodiments, the intermediate tool-holder heads are made without cooling systems operating by means of a cooling fluid and provide only for dissipation of the heat generated during use by heat exchange with ambient air, wherein the input and output shafts, the corresponding rotation supports and the angular transmission are in thermal contact with a casing, which casing comprises heat exchangers with ambient air and/or is made so as to have at least in some zones elements configured to function as heat exchangers with ambient air.

In an executive form, said heat exchangers consist of one or more fins distributed according to a predetermined pattern along the surface of the case of said intermediate head, and which are fixed in thermal contact with the wall of said case or conformed in piece with it.

According to an embodiment which may be provided in any combination with one of the preceding embodiments, the machining centre has a housing magazine for at least two or more intermediate heads, said magazine comprising a housing cradle for each of said intermediate heads, said cradles each being displaceable alternatively relative to the electrospindle respectively in a position away from said electrospindle and at rest, in a position of unloading and/or withdrawal of the intermediate head in and from the corresponding cradle.

In combination with the aforementioned feature, said centre comprises, motorised moving members of the magazine cradles for the intermediate heads and/or motorised moving members of the electrospindle, alternatively at a station for unloading an intermediate head from said electrospindle into a corresponding cradle and/or for grasping and withdrawing an intermediate head from a corresponding cradle by the electrospindle and out of said unloading and/or grasping and withdrawing station.

According to a still further feature, the centre and/or each electrospindle are provided with sensors for measuring the temperature of said intermediate head respectively mounted on said electrospindle or alternatively with a clock for measuring the dwell and/or operating time of said operating head, which sensors and/or which clock provides the respectively measured values of the temperature of said intermediate head and/or of the dwell and/or operating time of said intermediate head on said electrospindle to a control unit, in which maximum threshold values of said temperature and/or said dwell time are stored and/or memorised, which values are compared with the corresponding measured values, a command being generated to execute the replacement procedures of said intermediate head on said electrospindle when the measured temperature and/or the dwell time exceed the corresponding maximum threshold value.

These and other features and advantages of the present invention will become clearer from the following description of some implementation examples illustrated in the accompanying drawings where:
Fig. 1 shows a view of an example of a state-of-the-art machining centre.
Figs. 2 and 3 schematically show a construction of the working unit according to a first embodiment of the present invention in two rotation positions of the C-arm and electrospindle, an angled or optionally T-shaped intermediate tool-holder head being mounted in both figures.
Figures 4.1, 4.2, 4.3 show how with the angled or T-shaped tool-holder intermediate head according to the present invention it is also possible to perform machining operations on the underside of a beam, without changing the position of the beam and without providing for additional degrees of freedom or axes of movement of the working unit.
Figure 5 shows a further embodiment of the present invention, in particular the machining unit in the machining gantry and the magazine for two tool heads.
Figure 6 is a view of the intermediate tool-head magazine of Figure 5 and wherein the main construction elements of said magazine are shown separated from the remaining structure.
Figure 7 shows a section in a plane containing the central axes of the three spindles of an intermediate T-shaped head executive form.

In this description, reference is made to the more general structure of the machining centre in Figure 1 and the description of the machining centre in the introductory section.

It is clear, how the solution in Figure 1 is to be considered a non-limiting executive example of a machining centre , in order to make evident the common parts between the machining centre of the state of the art and the machining centre according to the present invention.

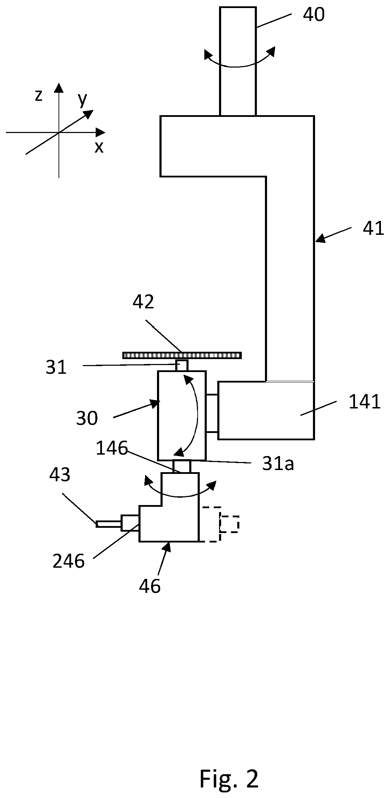

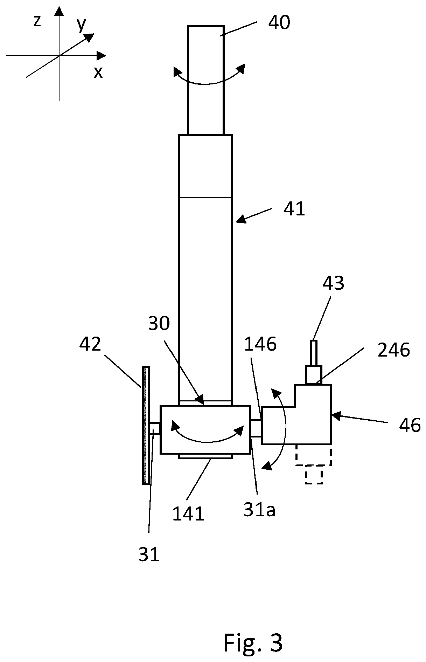

Referring to Figures 2 and 3, a working unit comprises a vertical slide 40 which is slidingly mounted in a vertical guide oriented according to the z-axis as shown in the figure. At the lower end of said vertical slide is suspended a C-arm 41 which is translationally integral with said vertical slide 40. Further, said vertical slide 40 and said C-arm 41 are pivotable about said vertical translation axis z, or said C-arm 41 alone is pivotable with respect to said vertical slide 40 about said axis z. At the end of the lower branch 141 of the C-arm 41 an electrospindle 30 is oscillatingly mounted about an axis parallel to said branch 141 and/or horizontally.

The electrospindle 30 has two outputs on opposite head faces denoted 31 and 31a. The output 31 stably carries a circular saw blade 42, while the output 31a carries a coupling spindle of a machining tool 43 such as a milling cutter or other rotating tool. Said coupling spindle is configured to couple and uncouple automatically from the tool by means of actuators integrated in the electrospindle.

The illustrated electrospindle can be realised analogously to one of the existing state-of-the-art solutions, e.g. according to one of the solutions in documents IT102016000107750 and IT102011901997732.

An intermediate tool-holder head 46 is coupled to the coupling spindle of output 31a, which is angled or T-shaped (see lateral extension in broken line).

The intermediate angled or T-shaped tool-holder head 46 has an input shaft 146 provided with means configured to cooperate with the coupling spindle of the output 31a of the electrospindle 30 and which spindle is coaxial or possibly parallel to the axis of the electrospindle 30, while an output shaft 246 is oriented perpendicular to said input shaft 146 and carries a coupling and uncoupling spindle automatically to the machining tool 43, for example a milling cutter or the like.

The electrospindle 30 is rotatable about an axis perpendicular to the rotation axis of the tools 42 and 43, and in Figure 3, said electrospindle 30 is rotated to a position wherein the intermediate tool-holder head is oriented with the cutter 43, vertically upwards and can thus be moved by means of the translations of the C-arm 41 in the vertical z-direction and in one or both of the x- and y-directions subtending the horizontal plane, below the underside of a beam being machined.

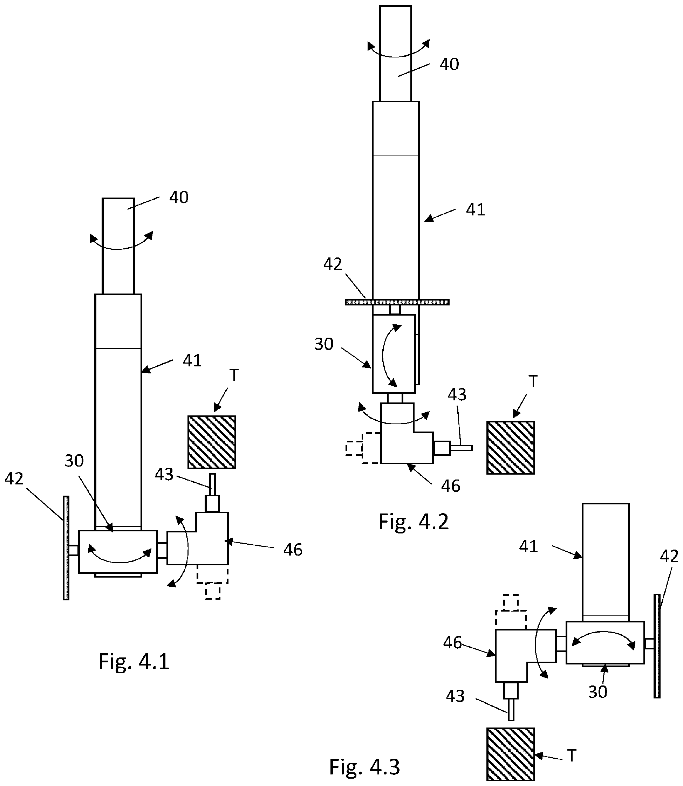

Figures 4.1 to 4.3 show different working positions of the C-arm assembly, electrospindle 30 and tool-holder head 46 that allow machining of the different faces of a rectangular beam marked T.

It is evident that compared to the known solutions of the art, it is not necessary to rotate the T-beam in order to orientate the face initially facing downwards, at least sideways or upwards, nor is it necessary to modify the driving means of the working unit, i.e. the C-arm and electrospindle, in order to perform the machining operation especially of figure 4.1.

Obviously, the solution proposed in the example of figures 4.1 to 4.3 provides that the tool-holder head 46 always remains coupled to the electrospindle 30. This, however, is not necessary with regard to the machining operations relative to figures 4.2 and 4.3, whereby the intermediate tool-holder head 46 may be loaded and coupled to the electrospindle even only to perform the machining operations according to figure 4.1, while it may be unloaded and placed for the machining operations according to figures 4.2 and 4.3.

It should also be noted that lateral machining on the opposite face to that shown in figure 4.2 is obtained by simply moving the C-arm sideways and rotating it 180° so as to obtain a mirror-image position with respect to that shown in figure 4.2.

With reference to the methods of coupling and uncoupling of the tool-holder intermediate head, these can be made automatic using members similar to those provided for the output 31a of the electrospindle 30 for the various tools 43 when mounted directly on said output as provided for in the state of the art. Said members described in the above-mentioned documents and incorporated by reference in the present description are modifiable in order to operate with the intermediate tool-holder head 46 by drawing on the basic technical knowledge of the skilled person in the art.

This also applies to the angle transmission between input shaft 146 and output shaft 246, which can be, for example, a bevel gear or a more complex transmission.

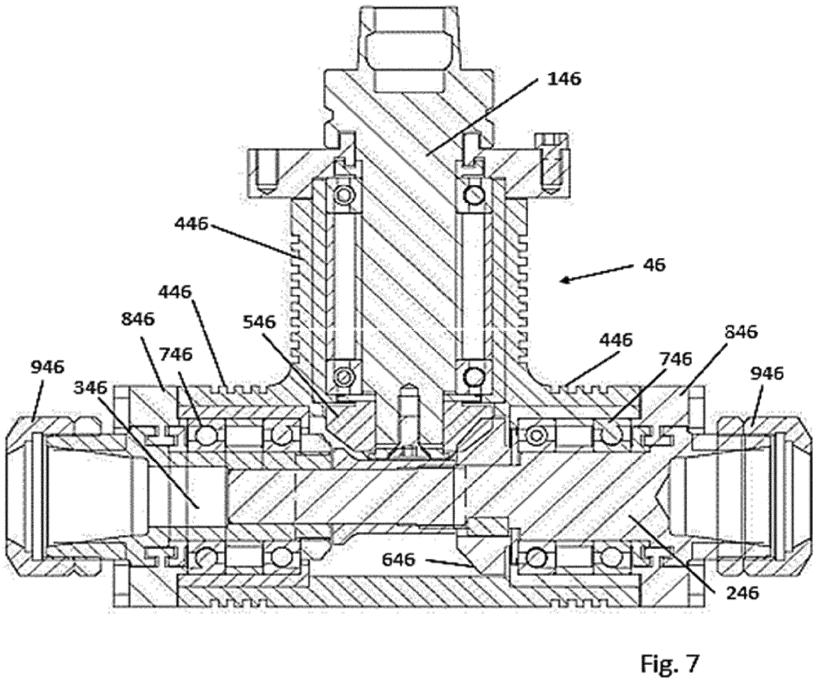

Figure 7 shows a section along a plane containing the central axes of the three shafts 146, 246, and 346.

According to a feature that can be provided for in any of the embodiment of the intermediate tool-holder head 46, whether in the angled embodiment or in the T-shaped embodiment, said intermediate tool-holder head 46 is realised without a fluid cooling system, e.g. oil, and therefore the cooling is of the air type, at least part of the walls of the case of the intermediate tool-holder heads 46 being realised finned as shown in a non-limiting but purely illustrative sense in combination with the embodiment of Figure 7 and indicated with 446.

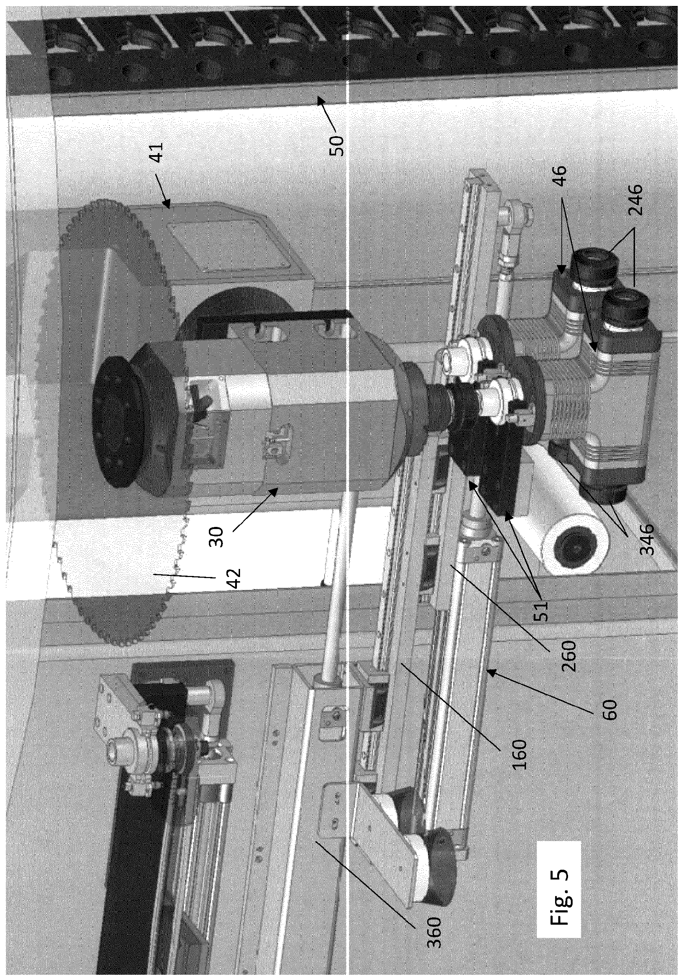

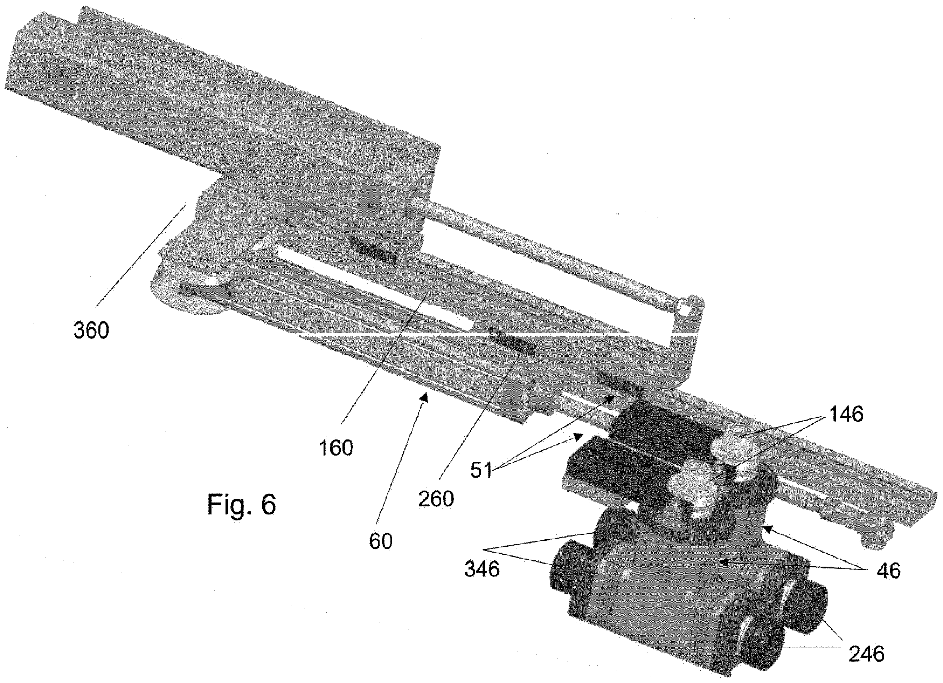

As will be described in greater detail with reference to a non-limiting embodiment shown in Figures 5 and 6, in order to allow the temperature of the intermediate tool-holder head 46 to be kept within certain limits and to avoid having to introduce idle times into the machining process there is provided a particular magazine specifically dedicated to accommodate at least two intermediate tool-holder heads 46 in a ready-to loading position, the electrospindle 30 and/or the housings for the two or more intermediate tool-holder heads 46 being displaceable in an unloading position and/or loading of an intermediate tool-holder head 46 in a corresponding housing of said magazine.

According to one form of embodiment, the process of unloading an intermediate tool-holder head 46 that has reached a certain temperature and withdrawing a new intermediate tool-holder head 46 that is housed in the magazine in the ready position can be controlled by a control unit of the machining centre depending on the temperature value of the intermediate head mounted on the electrospindle 30.

This temperature value can be detected by means of a temperature sensor associated or associated with the intermediate tool-holder head 46 respectively mounted on the electrospindle 30.

It is possible to provide different types of temperature sensors that can be sensors mounted on each intermediate head and that can communicate with the control unit via a wireless communication protocol, such as Bluetooth, NFC, Wi-Fi or similar.

In the sensors can also be wired and communicate with the control unit via transmission of RF signals along the metal parts of the machine, alternatively or in combination one or more sensors, e.g. an infrared, non-contact sensor can be permanently mounted e.g. on the electrospindle and/or gantry of the machining centre, which sensors are pointed at the intermediate tool-holder head 46 mounted on the electrospindle 30 and detect its temperature.

Alternatively, or in combination, a maximum time can be set, which corresponds under standard working conditions to reaching a predetermined intermediate tool-holder head temperature 46 and which can be set in the control unit.

According to an embodiment in the control unit, i.e., in a memory thereof, software is loaded which contains instructions for detecting the temperature of the intermediate tool-holder head 46 which is mounted on the electrospindle and for comparing said temperature with a reference temperature which constitutes a maximum temperature threshold, as well as instructions for performing the replacement of the intermediate tool-holder head 46 which is mounted on the electrospindle 30 with a new intermediate tool-holder head 46, when the temperature of the intermediate tool-holder head 46 on the electrospindle 30 exceeds said maximum threshold. The replacement of the intermediate tool-holder heads 46 takes place by means of the instructions controlling the magazine and the electrospindle to perform the operations of unloading the intermediate tool-holder head 46 which is mounted on the electrospindle 30 into the corresponding slot of the magazine and withdrawing with said electrospindle, from said magazine the replacement intermediate head.

For the embodiment that provides of setting a maximum actuating time of intermediate tool-holder head 46 defined on the basis of the fact that this working time causes the temperature of intermediate tool-holder head 46 to rise by the order of magnitude of the reference temperature, the maximum threshold set is said maximum actuating time of intermediate tool-holder head 46.

With reference to a specific embodiment of an intermediate tool-holder head 46, Figure 7 refers to the T-configuration, but it is also clear how to modify the said construction to obtain an angled intermediate head.

The input spindle 146 can be rotationally coupled with the corresponding spindle of electrospindle 30.

The inner end carries a bevel gear 546 which engages with a bevel gear 646 splined to a first semi-spindle 246. This carries at its end a removable coupling spindle 946 to a tool.

A further half-shaft 346 is rotationally connected coaxially to the first half-shaft 246 with its inner end, while the outer end also carries a removable coupling spindle 946 of a tool. The two half-shafts 246 and 346 are rotatably mounted in the case by means of coaxial bearings 746, and the assembly of the two half-shafts 246, 346, the bevel gear 646 and the bearings 746 is axially held in position by means of end caps 846.

As is evident, the cooling of the moving parts takes place solely by thermal conduction through the bearings and also by radiation, although to a much lesser extent, and the heat is transmitted to the housing from which it is dissipated into the environment via the fins 446. The fins can be made in any manner other than illustrated and can also be distributed along the surface of the intermediate head housing in a manner other than illustrated.

Generally speaking, the fins can also be replaced in combination with any of the further features by other dissipation members that have the function of heat exchangers of the intermediate head casing and/or the casing itself with the external environment, the embodiment illustrated being a non-limiting example of implementation.

Figures 5 and 6 show an embodiment wherein the machining centre has a magazine for at least two intermediate tool-holder heads 46 which can be used alternately with each other according to the general feature already described above.

According to a first, more general feature, the intermediate tool-holder heads 46 can be either T-shaped or angled, although in this example embodiment the intermediate tool-holder heads 46 are configured in a T-shape, inverted, the leg of the T being associated with the input shaft 146 coupled to the output 31a of the electrospindle 30 and two opposing output shafts 246 and 346 having axes perpendicular to the end surfaces of the cross-branch ends of the T-shape.

A tool magazine is indicated with 50 and this magazine is intended to accommodate tools that can be coupled directly to the output 31a of the electrospindle 30.

A possible embodiment may further provide that the tools provided in the tool magazine 50, or at least part thereof, can be automatically loaded or unloaded by an intermediate tool-holder head 46. Of the type provided with a spindle 246 or 346 equipped with the mechanisms for automatically coupling/uncoupling a tool and which mechanisms can be controlled by the coupling/uncoupling mechanisms of the output spindle 31a of the electrospindle, thanks to a mechanical transmission of the actuating motion integrated in said intermediate tool-holder head 46.

A dedicated magazine is provided for the intermediate tool-holder heads 46, which in the present example embodiment has one housing cradle for each intermediate tool-holder head 46 of at least two intermediate tool-holder heads 46. The housing cradles for the individual tool-holder heads 46 indicated with 51e are movable from a withdrawn position with respect to a coupling/uncoupling station and thus of loading and unloading of a tool-holder head 46 at and from the electrospindle 30, to a working position wherein the cradles are positioned in said station and ready for loading and unloading of said tool-holder heads 46 by the electrospindle 30.

A relative translation in a cross direction to that of moving the cradles to said withdrawn position and to said unloading and/or loading position can be performed by moving the electrospindle 30 relative to said cradles and/or by further moving said cradles in said transverse direction so as to first bring an empty cradle at the electrospindle to accommodate the intermediate tool-holder head 46 being unloaded by said electrospindle and then the cradle with an intermediate tool-holder head 46 which is waiting to be loaded by the electrospindle to replace the one just unloaded.

It is clear that the number of intermediate heads can also be greater than two, but two heads are an optimal solution from the point of view of cost and space.

This solution therefore not only makes it possible to quickly replace intermediate heads that have reached temperatures above the above-mentioned maximum threshold, but also to avoid interrupting the workflow in order to carry out maintenance work on the intermediate head respectively at rest in the magazine.

For movement from the retracted rest position to the loading and/or unloading position, several solutions are possible, from which the skilled person in the art can choose drawing on basic technical knowledge. The solution illustrated provides an extendable arm 60 tied at one end to the centre frame and the free end of which carries cradles 51.

In the embodiment, there are two arm sections 160, 260 sliding axially on top of each other and with respect to a first stationary section 360.

Sliding can be controlled by motorised devices such as electromechanical, pneumatic and/or hydraulic linear actuators, under the control of a centre control unit.

The movement in the transverse direction with respect to the stretching/shortening direction of said extendable arm 60 can take place by moving said electrospindle 30 with respect to said extendable arm 60 and/or by mounting said arm, further on a cart or slide along said transverse direction, said carriage or slide being suitably motorised and controlled by said control unit to perform the movements and/or functions of loading and/or unloading, or replacement of the intermediate tool-holder heads 46 described above.

## Claims

1. Machining centre, in particular for beams or similar, comprises:
- a gantry beam structure (10) having a passage opening for a beam to be machined;
- feeding means (11, 12) for a beam to be machined, according to a straight feeding path of said beam that is oriented according to a first translation and insertion axis (X) of the beam through said passage opening;
- a working unit (14) comprising an electrospindle (30) for coupling and driving at least one working tool (43);
- said working unit (14) being supported by driving means of the latter of at least one, or optionally two, three, four or five axes of movement of the said working unit and wherein
- at least one tool changing station comprising a tool magazine (50) is provided, whereby said working unit (14) is movable by said driving means in said at least one tool changing station, with the electrospindle (30) in a position of loading and/or unloading a tool in said tool magazine (50),
said electrospindle (30) being equipped with automatic coupling member to a tool and/or uncoupling and unloading of a tool
wherein
there is further provided at least one intermediate tool-holder head (46) to which at least one working tool (43) is couplable, and which intermediate tool-holding head (46) is couplable and uncouplable to at least one output (31a) of the electrospindle (30) and comprises an input shaft (146) couplable to said output (31a) of the electrospindle (30) and coaxial or parallel to the axis thereof, and at least one output shaft (246, 346) provided with a coupling spindle for a further working tool (43) selectable from a plurality of different working tools, which output shaft (246, 346) is oriented with its axis perpendicular to the axis of the input shaft (146)
**characterised in that**
said electrospindle (30) is oscillatingly mounted horizontally and/or about an axis parallel to the end of a lower branch (141) of a a C-arm (41), which is translationally integral with a vertical slide (40), said vertical slide (40) being slidingly mounted in a vertical guide, the said C-arm (41) being suspended at the lower end of said vertical slide (40) and translationally integral with said vertical slide (40), said vertical slide (40) and said C-arm (41) are pivotable about said vertical translation axis z, or said C-arm (41) alone is pivotable with respect to said vertical slide (40) about said axis z.

2. Machining centre according to claim 1, wherein said intermediate tool-holder head (46) comprises an angular transmission, between an input shaft (146) and at least one output shaft (246), and in combination a transmission of the driving movement of the tool coupling/uncoupling members provided on the electrospindle (30) to the coupling spindle provided on the output shaft (246) of said intermediate tool-holder head (46).

3. Machining centre according to claim 1 or 2, wherein according to still another embodiment said intermediate tool-holder head (46) may have two output shafts (246, 346) opposed to each other and coaxial or parallel which terminate with a corresponding tool coupling spindle at opposing head faces of the cross arm of said intermediate tool-holder head (46), with reference to the axis of the electrospindle (30).

4. Machining centre according to one of the preceding claims, wherein the intermediate tool-holder heads (46) are made without cooling devices operating by means of a cooling fluid and provide only for dissipation of the heat generated during use by means of heat exchange with the ambient air, the input and output shafts (146, 246, 346), the corresponding rotation supports and the angular transmission being in thermal contact with a casing, which casing comprises heat exchangers with the ambient air and/or is made so as to have at least in some zones elements configured to operate as heat exchangers with the ambient air.

5. Machining centre according to claim 4, wherein said exchangers comprise one or more fins distributed according to a predetermined pattern along the surface of the casing of said intermediate tool-holder head (46), and which are fixed in thermal contact with the wall of said casing or conformed in piece with said casing.

6. Machining centre according to one of the preceding claims, wherein said machining centre may provide two or more intermediate tool-holder heads (46) which can be automatically coupled and uncoupled similarly to the tools to at least one of the electrospindle outputs (31a) and wherein said intermediate tool-holder heads (46) are each housed in a separate cradle (51) of an intermediate tool-holder head magazine, said magazine being independent and/or separate from the tool-holder magazine (50).

7. Machining centre according to one of the preceding claims, wherein said tool-holder magazine comprises cradles and said cradles (51) are alternatively movable in a position withdrawn from a coupling/uncoupling station, i.e. of loading by said electrospindle (30) and unloading of said intermediate tool-holder heads (46) from said electrospindle (30), in a position coinciding with said station for performing actions of loading and/or unloading of an intermediate tool-holder head (46), and wherein in said coupling/uncoupling station i.e. of loading and unloading said intermediate tool-holder heads (46), one of said tool-holder heads (46) or a cradle (51) for one of said tool-holder heads (46) is aligned with said electrospindle (30) for the coupling of an intermediate tool-holder head (46) to said electrospindle (30) and/or for the unloading of an intermediate tool-holder head (46) from said electrospindle (30) into the corresponding cradle (51).

8. Machining centre according to claim 7, wherein the storage for intermediate tool-holder heads (46) comprises an extendable and/or shortenable arm (60), for example telescopically or otherwise, one end of which arm is permanently fixed to a stationary structural reference (360), while the free end is provided with one or more cradles (51) or storage housings of a corresponding intermediate tool-holder head (46).

9. Machining centre according to one of the preceding claims wherein, the electrospindle (30) may comprise two outlets (31, 31a) of which one (31) is stably coupled to a circular saw blade (42) while the other (31a) is removably coupled to one of a plurality of intermediate tool-holder heads (46).

10. Machining centre according to one of the preceding claims, comprising a control unit, wherein the centre and/or each electrospindle (30) are provided with sensors for measuring the temperature of the intermediate head (46) respectively mounted on the electrospindle (30) or alternatively with a clock for measuring the dwell time and/or the activity of said operating head (46), said sensors and/or said clock being configured for providing the respectively measured values of the temperature of said intermediate head (46) and/or the dwell time and/or the activity of said intermediate head (46) on said electrospindle (30) to the control unit in which maximum threshold values of said temperature and/or said dwell time are stored and/or memorised, said control unit being configured for comparing said values with the corresponding measured values, and for generating a command for executing the replacement procedures of said intermediate head (46) on said electrospindle (30) when the measured temperature and/or the dwell time exceed the corresponding maximum threshold value.

## Patentansprüche

1. Bearbeitungszentrum, insbesondere für Balken oder dergleichen, umfassend:
- eine Portalbalkenstruktur (10) mit einer Durchgangsöffnung für einen zu bearbeitenden Balken;
- Zuführmittel (11, 12) für einen zu bearbeitenden Balken gemäß einem geraden Zuführweg des Balkens, der gemäß einer ersten Verfahr- und Einführungsachse (X) des Balkens durch die Durchgangsöffnung ausgerichtet ist;
- eine Arbeitseinheit (14) umfassend eine Elektrospindel (30) zum Kuppeln und Antreiben mindestens eines Arbeitswerkzeugs (43);
- wobei die Arbeitseinheit (14) durch Bewegungsmittel derselben gemäß mindestens einer oder optional zwei, drei, vier oder fünf Bewegungsachsen der Bearbeitungseinheit getragen wird und wobei
- mindestens eine Werkzeugwechselstation mit einem Werkzeugmagazin (50), wobei die Arbeitseinheit (14) durch die Bewegungsmittel in die mindestens eine Werkzeugwechselstation bewegbar ist, wobei die Elektrospindel (30) in einer Position zum Laden und/oder Entladen eines Werkzeugs in das bzw. aus dem Werkzeugmagazin (50) angeordnet ist, wobei die besagte Elektrospindel (30) mit einem automatischen Kupplungselement zum Ankuppeln und/oder Abkuppeln und Entladen eines Werkzeugs ausgestattet ist, wobei ferner mindestens ein Zwischenwerkzeughalterkopf (46) vorgesehen ist, an den mindestens ein Arbeitswerkzeug (43) angekuppelt werden kann, und welcher Zwischenwerkzeughalterkopf (46) mit mindestens einem Ausgang (31a) der Elektrospindel (30) kuppelbar und entkuppelbar ist und eine mit dem Ausgang (31a) der Elektrospindel (30) kuppelbare und zu deren Achse koaxiale oder parallele Eingangswelle (146) und mindestens eine Ausgangswelle (246, 346) umfasst, die mit einer Kupplungsspindel für ein weiteres Arbeitswerkzeug (43) versehen ist, das aus einer Vielzahl verschiedener Arbeitswerkzeuge auswählbar ist, wobei die Ausgangswelle (246, 346) mit ihrer Achse senkrecht zur Achse der Eingangswelle (146) ausgerichtet ist, **dadurch gekennzeichnet, dass** die Elektrospindel (30) horizontal und/oder um eine Achse parallel zum Ende eines unteren Arms (141) eines mit einem vertikalen Schlitten (40) verfahrfest verbundenen C-Arms (41) schwenkbar gelagert ist, wobei der vertikale Schlitten (40) in einer vertikalen Führung verschiebbar angebracht ist, wobei der C- Arm (41) am unteren Ende des vertikalen Schlittens (40) aufgehängt ist und verfahrfest mit dem vertikalen Schlitten verbunden ist (40), wobei der vertikale Schlitten (40) und der C- Arm (41) um die vertikale Verfahrachse z schwenkbar sind oder nur der C-Arm (41) bezüglich des vertikalen Schlittens (40) um die Achse z schwenkbar ist.

2. Bearbeitungszentrum nach Anspruch 1, wobei der Zwischenwerkzeughalterkopf (46) ein Winkelgetriebe zwischen einer Eingangswelle (146) und mindestens einer Ausgangswelle (246) umfasst und in Kombination ein Getriebe umfasst zur Übertragung des Antriebsmoments der an der Elektrospindel (30) vorgesehenen Werkzeug-Kupplungs-/Entkupplungselemente an die Kupplungsspindel, die an der Ausgangswelle (246) des Zwischenwerkzeughalterkopfes (46) vorgesehen ist.

3. Bearbeitungszentrum nach Anspruch 1 oder 2, wobei gemäß einer weiteren Ausführungsform der Zwischenwerkzeughalterkopf (46) zwei einander gegenüberliegende und koaxiale oder parallele Ausgangswellen (246, 346) aufweisen kann, die mit einer entsprechenden Werkzeugkupplungsspindel an gegenüberliegenden Kopfseiten des Querarms des Zwischenwerkzeughalterkopfs (46) enden, bezogen auf die Achse der Elektrospindel (30).

4. Bearbeitungszentrum gemäß den vorstehenden Ansprüchen, wobei die Zwischenwerkzeughalterköpfe (46) ohne Kühlvorrichtungen hergestellt sind, die mittels einer Kühlflüssigkeit arbeiten, und nur für die Abgabe der während des Gebrauchs erzeugten Wärme mittels Wärmeaustausch mit der Umgebungsluft sorgen, wobei die Eingangs- und Ausgangswellen (146, 246, 346), die entsprechenden Drehlager und das Winkelgetriebe in thermischem Kontakt mit einem Gehäuse stehen, wobei das Gehäuse mit der Umgebungsluft arbeitende Wärmetauscher umfasst und/oder so ausgebildet ist, dass es zumindest in einigen Bereichen Elemente aufweist, die als mit der Umgebungsluft arbeitende Wärmetauscher ausgebildet sind.

5. Bearbeitungszentrum nach Anspruch 4, wobei die Wärmetauscher eine oder mehrere Lamellen umfassen, die gemäß einem vorbestimmten Muster entlang der Oberfläche des Gehäuses des Zwischenwerkzeughalterkopfes (46) verteilt sind und die in thermischem Kontakt mit der Wand des Gehäuses befestigt oder einstückig mit dem Gehäuse ausgebildet sind.

6. Bearbeitungszentrum nach einem der vorstehenden Ansprüche, wobei das Bearbeitungszentrum zwei oder mehr Zwischenwerkzeughalterköpfe (46) aufweisen kann, die ähnlich wie die Werkzeuge automatisch an mindestens einen der Elektrospindelausgänge (31a) angekoppelt und von diesem abgekoppelt werden können, und wobei die Zwischenwerkzeughalterköpfe (46) jeweils in einer separaten Wiege (51) eines Zwischenwerkzeughalterkopfmagazins untergebracht sind, wobei das Magazin unabhängig und/oder getrennt vom Werkzeughaltermagazin (50) ist.

7. Bearbeitungszentrum nach einem der vorstehenden Ansprüche, wobei das Werkzeugmagazin Wiegen umfasst und diese Wiegen (51) abwechselnd in eine Position bewegbar sind, die von einer Kupplungs-/Entkupplungsstation, d. h. zum Laden durch die Elektrospindel (30) und zum Entladen der Zwischenwerkzeughalterköpfe (46) von der Elektrospindel (30), zurückgezogen ist, in eine Position, die mit der Station zur Ausführung von Lade- und/oder Entladevorgängen eines Zwischenwerkzeughalterkopfes (46) übereinstimmt, und wobei in der Kupplungs-/Entkupplungsstation, d. h. zum Laden und Entladen der Zwischenwerkzeughalterköpfe (46), einer der Werkzeughalterköpfe (46) oder eine Wiege (51) für einen der Werkzeugaufnahmeköpfe (46) mit der Elektrospindel (30) ausgerichtet wird, um einen Zwischenwerkzeugaufnahmekopf (46) mit der Elektrospindel (30) zu kuppeln und/oder einen Zwischenwerkzeugaufnahmekopf (46) von der Elektrospindel (30) in die entsprechende Wiege (51) zu entladen.

8. Bearbeitungszentrum nach Anspruch 7, wobei das Magazin für Zwischenwerkzeughalterköpfe (46) einen ausziehbaren und/oder einziehbaren Arm (60), beispielsweise teleskopisch oder auf andere Weise, umfasst, dessen eines Ende dauerhaft an einer ortsfesten Strukturreferenz (360) befestigt ist, während das freie Ende mit einer oder mehreren Wiegen (51) oder Magazinaufnahmen eines entsprechenden Zwischenwerkzeughalterkopfes (46) versehen ist.

9. Bearbeitungszentrum nach einem der vorstehenden Ansprüche, wobei die Elektrospindel (30) zwei Ausgänge (31, 31a) aufweisen kann, von denen einer (31) fest mit einem Kreissägeblatt (42) verbunden ist, während der andere (31a) lösbar mit einem von mehreren Zwischenwerkzeughalterköpfen (46) verbunden ist.

10. Bearbeitungszentrum gemäß einem der vorstehenden Ansprüche, umfassend eine Steuereinheit, wobei das Zentrum und/oder jede Elektrospindel (30) mit Sensoren zum Messen der Temperatur des jeweils an der Elektrospindel (30) angebrachten Zwischenkopfes (46) oder alternativ mit einer Uhr zum Messen der Verweilzeit und/oder der Aktivität des Betriebskopfes (46) versehen sind, wobei die Sensoren und/oder die Uhr derart ausgestaltet sind, dass sie die jeweils gemessenen Werte der Temperatur des Zwischenkopfes (46) und/oder der Verweilzeit und/oder der Aktivität des Zwischenkopfes (46) auf der Elektrospindel (30) an die Steuereinheit übermitteln, in der maximale Schwellenwerte der Temperatur und/oder der Verweilzeit gespeichert und/oder hinterlegt sind, wobei die Steuereinheit dazu eingerichtet ist, die Werte mit den entsprechenden Messwerten zu vergleichen und eine Anweisung zum Ausführen der Wechselvorgänge des Zwischenkopfes (46) an der Elektrospindel (30) zu erzeugen, wenn die gemessene Temperatur und/oder die Verweilzeit den entsprechenden maximalen Schwellenwert überschreiten.

## Revendications

1. Centre d'usinage, notamment pour des poutres ou similaires, comprenant:
- une structure (10) de poutre de portique ayant une ouverture de passage pour une poutre à usiner;
- des moyens d'alimentation (11, 12) pour une poutre à usiner, selon une trajectoire d'alimentation rectiligne de ladite poutre qui est orientée selon un premier axe de translation et d'insertion (X) de la poutre à travers ladite ouverture de passage;
- une unité de travail (14) comprenant une broche électrique (30) pour coupler et entraîner au moins un outil de travail (43);
- ladite unité de travail (14) étant supportée par des moyens d'entraînement du dernier d'au moins un, ou éventuellement deux, trois, quatre ou cinq axes de mouvement de ladite unité de travail, et dans lequel
- au moins une station de changement d'outil comprenant un magasin d'outils (50) est prévu, dans lequel ladite unité de travail (14) peut être déplacée par lesdits moyens d'entraînement dans ledit au moins une station de changement d'outil, avec la broche électrique (30) dans une position de chargement et/ou de déchargement d'un outil dans ledit magasin d'outils (50),
ladite broche électrique (30) étant équipée d'un élément de couplage automatique pour le couplage et/ou découplage d'un outil et pour le déchargement d'un outil
dans lequel
il est en outre prévue au moins une tête porte-outil intermédiaire (46) à laquelle au moins un outil de travail (43) peut être couplé, et laquelle tête porte-outil intermédiaire (46) peut être couplée à et découplée d'au moins une sortie (31a) de la broche électrique (30) et comprend un arbre d'entrée (146) pouvant être couplé à ladite sortie (31a) de la broche électrique (30) et coaxial ou parallèle à son axe, et au moins un arbre de sortie (246, 346) muni d'une broche de couplage pour un autre outil de travail (43) pouvant être sélectionné parmi une pluralité de différents outils de travail, lequel arbre de sortie (246, 346) est orienté avec son axe perpendiculaire à l'axe de l'arbre d'entrée (146)
**caractérisé en ce que**
ladite broche électrique (30) est montée de manière oscillante horizontalement et/ou autour d'un axe parallèle à l'extrémité d'une branche inférieure (141) d'un bras en C (41), qui est solidaire en translation d'une coulisse verticale (40), ladite coulisse verticale (40) étant montée de manière coulissante dans un guide vertical, ledit bras en C (41) étant suspendu à l'extrémité inférieure de ladite coulisse verticale (40) et solidaire en translation de ladite coulisse verticale (40), ladite coulisse verticale (40) et ledit bras en C (41) pouvant pivoter autour dudit axe de translation vertical z, ou ledit bras en C (41) pouvant pivoter seul par rapport à ladite coulisse verticale (40) autour dudit axe z.

2. Centre d'usinage selon la revendication 1, dans lequel ladite tête porte-outil intermédiaire (46) comprend une transmission angulaire, entre un arbre d'entrée (146) et au moins un arbre de sortie (246), et en combinaison une transmission du mouvement d'entraînement des éléments de couplage/découplage de l'outil prévus sur la broche électrique (30) à la broche de couplage prévue sur l'arbre de sortie (246) de ladite tête porte-outil intermédiaire (46).

3. Centre d'usinage selon la revendication 1 ou 2, dans lequel selon encore un autre mode de réalisation, ladite tête porte-outil intermédiaire (46) peut avoir deux arbres de sortie (246, 346) opposés l'un à l'autre et coaxiaux ou parallèles qui se terminant avec une broche de couplage d'outil correspondant sur des faces de tête opposées du bras transversal de ladite tête porte-outil intermédiaire (46), par rapport à l'axe de la broche électrique (30).

4. Centre d'usinage selon l'une des revendications précédentes, dans lequel les têtes porte-outil intermédiaires (46) sont réalisées sans dispositifs de refroidissement fonctionnant au moyen d'un fluide de refroidissement et ne prévoient que la dissipation de la chaleur générée lors de l'utilisation au moyens d'échange de chaleur avec l'air ambiant, les arbres d'entrée et de sortie (146, 246, 346), les supports de rotation correspondants et la transmission angulaire étant en contact thermique avec un boîtier, lequel boîtier comprend des échangeurs de chaleur avec l'air ambiant et/ou est réalisé de manière à avoir au moins des éléments configurés pour fonctionner comme des échangeurs de chaleur avec l'air ambiant dans certaines zones.

5. Centre d'usinage selon la revendication 4, dans lequel lesdits échangeurs comprennent une ou plusieurs ailettes distribuée(s) selon un motif prédéterminé le long de la surface du boîtier de ladite tête porte-outil intermédiaire (46) et qui est/sont fixée(s) en contact thermique avec la paroi dudit boîtier ou formée(s) en une pièce avec ledit boîtier.

6. Centre d'usinage selon l'une des revendications précédentes, dans lequel ledit centre d'usinage peut prévoir deux ou plusieurs têtes porte-outil intermédiaires (46) qui peuvent être automatiquement couplées à et découplée de manière similaire aux outils à au moins une des sorties de la broche électrique (31a), et dans lequel lesdites têtes porte-outil intermédiaires (46) sont chacune logées dans un support séparé (51) d'un magasin de têtes porte-outil intermédiaires, ledit magasin étant indépendant et/ou séparé du magasin porte-outil (50).

7. Centre d'usinage selon l'une des revendications précédentes, dans lequel ledit magasin porte-outil comprend des supports et lesdits supports (51) peuvent être alternativement déplacés dans une position retirée d'une station de couplage/de découplage, c.à.d. de chargement par ladite broche électrique (30) et de déchargement desdites têtes porte-outil intermédiaires (46) de ladite broche électrique (30), dans une position coïncidant avec ledit station pour effectuer des actions de chargement et/ou de déchargement d'une tête porte-outil intermédiaire (46), et dans lequel, dans ledit station de couplage/de découplage, c.à.d. de chargement et de déchargement desdites têtes porte-outil intermédiaires (46), une desdites têtes porte-outil (46) ou un support (51) pour une desdites têtes porte-outil (46) est alignée avec ladite broche électrique (30) pour le couplage d'une tête porte-outil intermédiaire (46) à ladite broche électrique (30) et/ou pour le déchargement d'une tête porte-outil intermédiaire (46) de ladite broche électrique (30) dans le support (51) correspondant.

8. Centre d'usinage selon la revendication 7, dans lequel stockage pour têtes porte-outil intermédiaires (46) comprend un bras extensible et/ou rétractable (60), par exemple télescopique ou autre, une extrémité de ce bras étant fixée de manière permanente à une référence structurelle stationnaire (360), tandis que l'extrémité libre est munie d'un ou plusieurs support(s) (51) ou logements de stockage d'une tête porte-outil intermédiaire (46) correspondante.

9. Centre d'usinage selon l'une des revendications précédentes, dans lequel la broche électrique (30) peut comprendre deux sorties (31, 31a) dont l'une (31) est couplée de manière stable à une lame de scie circulaire (42) tandis que l'autre (31a) est couplée de manière amovible à l'une d'une pluralité de têtes porte-outil intermédiaires (46).

10. Centre d'usinage selon l'une des revendications précédentes, comprenant une unité de commande 2, dans lequel le centre et/ou chaque broche électrique (30) est/sont muni(s) de capteurs pour mesurer la température de la tête intermédiaire (46) respectivement montée sur la broche électrique (30) ou alternativement d'une horloge pour mesurer le temps d'arrêt et/ou l'activité de ladite tête de fonctionnement (46), lesdits capteurs et/ou ladite horloge étant configurés pour fournir respectivement les valeurs mesurées de la température de ladite tête intermédiaire (46) et/ou du temps d'arrêt et/ou de l'activité de ladite tête intermédiaire (46) sur ledit broche électrique (30) à l'unité de commande dans laquelle sont stockées et/ou mémorisées les valeurs seuils maximales de ladite température et/ou dudit temps d'arrêt, ladite unité de commande étant configurée pour comparer lesdites valeurs avec les valeurs mesurées correspondantes et pour générer une commande d'exécution des procédures de remplacement de ladite tête intermédiaire (46) sur ladite broche électrique (30), lorsque la température mesurée et/ou le temps d'arrêt dépassent la valeur seuil maximale correspondante.
